**Europäisches Patentamt**

**European Patent Office**

**Office européen des brevets**

(19)

(11) Veröffentlichungsnummer : **0 313 747 B1**

# EUROPÄISCHE PATENTSCHRIFT

(12)

(45) Veröffentlichungstag der Patentschrift :
**10.04.91 Patentblatt 91/15**

(51) Int. Cl.⁵ : **B60R 13/10**

(21) Anmeldenummer : **88113402.7**

(22) Anmeldetag : **18.08.88**

(54) **Befestigungsvorrichtung für Kennzeichenschilder von Kraftfahrzeugen.**

(30) Priorität : **28.10.87 DE 8714331 U**

(43) Veröffentlichungstag der Anmeldung :
**03.05.89 Patentblatt 89/18**

(45) Bekanntmachung des Hinweises auf die
Patenterteilung :
**10.04.91 Patentblatt 91/15**

(84) Benannte Vertragsstaaten :
**AT BE DE ES FR GB NL**

(56) Entgegenhaltungen :
**DE-A- 2 930 182**
**DE-C- 3 524 091**
**DE-U- 8 716 527**
**GB-A- 1 604 189**

(73) Patentinhaber : **Erich Utsch KG**
**Marienhütte 49 Postfach 31 03 62**
**W-5900 Siegen (DE)**

(72) Erfinder : **Utsch, Joachim**
**Schubertstrasse 2**
**W-5900 Siegen (DE)**
Erfinder : **Utsch, Gerhard**
**Heinrichstrasse 20**
**W-5900 Siegen (DE)**

(74) Vertreter : **Pürckhauer, Rolf, Dipl.-Ing.**
**Friedrich-Ebert-Strasse 27 Postfach 10 09 28**
**W-5900 Siegen 1 (DE)**

## Beschreibung

Die Erfindung bezieht sich auf eine Befestigungsvorrichtung der im Oberbegriff des Anspruchs 1 angegebenen Gattung.

Aus der DE-C- 35 24 091 ist der eine Teil der aus zwei Teilen bestehenden erfindungsgemäßen Befestigungsvorrichtung für Kfz-Kennzeichenschilder bekannt, nämlich ein als Verstärkungsbauteil dienender Rahmen aus beschränkt elastischem Kunststoff mit jeweils zwei zueinander parallelen längeren und kürzeren Rahmenteilen, die als Winkelprofil ausgebildet sind, wobei der sich über den Umfang erstreckende Prägerand des Kennzeichenschildes seitlich durch den einen Schenkel und vorn durch den anderen Schenkel des Winkelprofils abgedeckt ist, und mit einem mit dem Rahmen verbundenen, an der Rückseite des Kennzeichenschildes in einer Ebene anliegenden Rückwandbereich, wobei das Kennzeichenschild zwischen dem Rahmen und dem Rückwandbereich des Verstärkungsbauteils eingeklemmt wird. Bei einer Ausbildung des Rahmens als einstückiges Formteil wird der Rückwandbereich des Verstärkungsbauteils lediglich durch voneinander getrennte Rückwandteilbereiche gebildet, die aus mehreren in einem gegenseitigen Abstand und in einem Abstand von den kürzeren Rahmenteilen angeordneten, die längeren Rahmenteile miteinander verbindenden Stegen sowie aus zwei an den kürzeren Rahmenteilen angeformten Zungen gebildet, die sich jeweils nur über einen Teil der Länge der kürzeren Rahmenteile erstrecken, wobei die eine Zunge, in Längsrichtung der längeren Rahmenteile gesehen, eine kleinere Erstreckung aufweist als die gegenüberliegende Zunge, so daß diese kleinere Zunge nach dem schmalseitigen Einschieben des Kennzeichenschildes hinter dem Rand desselben eingehängt werden kann, um eine verkaufsfertige Einheit von Rahmen und Kennzeichenschild auf einfache Weise zu bilden. Diese Einheit wird dann am Fahrzeug festgeschraubt, wobei das Kennzeichenschild an zwei festgelegten Stellen durchbohrt werden muß.

Die Kfz-Zulassungs- und -Überwachungsstellen dulden jedoch bereits die Befestigung des Kennzeichenschildes ohne Durchbohren desselben zum Durchführen von Befestigungsschrauben, So ist aus dem DE-GM 84 29 912 eine Verstärkungsunterlage aus Kunststoff für Kfz-Kennzeichen bekannt, bei der Umgriffe am Rahmen in Form von Lappen und/oder Leisten das Kennzeichenschild übergreifen, wobei wenigstens die Lappen einer Randseite unter Rastwirkung zu- und aufklappbar sind. Infolge der Zu- und Aufklappmöglichkeit der relativ weit vorstehenden Lappen oder Leisten wird ein unbefugtes Entfernen des Kennzeichenschildes zu sehr erleichtert. Der Wulstrand des Kennzeichenschildes, das in den Rahmen eingelegt werden muß, wird nicht überall von vorne erfaßt. Die zumindest am einen Längsrand der Verstärkungsunterlage über Filmscharniere mit dieser verbundenen Lappen sind gerade im Bereich dieser Filmscharniere im Hinblick auf die angestrebte diebstahlsichere Befestigung des Kennzeichens ein Schwachpunkt, zumal die Raststellen von außen leicht erkennbar sind.

Der Erfindung liegt die Aufgabe zugrunde, eine relativ sichere Befestigung eines Kfz-Kennzeichenschildes unter Verwendung des Verstärkungsbauteils nach DE-PS 35 24 091 zu ermöglichen.

Diese Aufgabe wird erfindungsgemäß durch die kennzeichnenden Merkmale des Anspruchs 1 gelöst. Eine zweckmäßige weitere Ausgestaltung ist dem Unteranspruch zu entnehmen.

Die erfindungsgemäße Befestigungsvorrichtung bildet eine ringsum geschlossene Halterung für ein Kennzeichenschild von Kraftfahrzeugen und läßt die Raststellen nicht ohne weiteres erkennen. Außerdem ist das als Rahmen ausgebildete Verstärkungsbauteil nur bei genauer Kenntnis der Stellen der Verrastung mit der am Fahrzeug angeschraubten Platte und dann nur mit einem Spezialwerkzeug zu lösen, dann aber so, daß alle Teile der Befestigungsvorrichtung wiederverwendbar sind.

In der Zeichnung ist ein Ausführungsbeispiel der erfindungsgemäßen Befestigungsvorrichtung dargestellt. Dabei zeigt

Fig. 1 die Draufsicht auf die am Fahrzeug zu befestigende Platte ohne Verstärkungsbauteil und

Fig. 2 in gesprengter, gegenüber Fig. 1 vergrößerter Darstellung einen Schnitt nach der Linie II-II in Fig. 1 der gesamten Vorrichtung.

Eine aus relativ steifem Kunststoff gespritzte Platte 1 mit seitlichen kürzeren Rändern 2, 3 und oberen und unteren Längsrändern 4, 5 weist in symmetrischer Anordnung auf ihre Fläche verteilte rippenartige Erhöhungen 6 auf, die von der Rückseite her hohl sind, so daß für eine relativ steife Ausbildung der Platte 1 relativ wenig Kunststoff benötigt wird.

In der Nähe des in Gebrauchsstellung oberen Längsrandes 4 der Platte 1 sind mehrere im Abstand voneinander angeordnete Haken 7 angeformt, während am unteren Längsrand 5 eine vorzugsweise gleiche Anzahl von Aussparungen 8 vorgesehen ist, auf die nachfolgend noch eingegangen wird. Ferner weist die Platte 1 in Vertiefungen verschiedene, in bezug auf die Schnittlinie II-II symmetrisch angeordnete Langlöcher 9 für Befestigungsschrauben (nicht dargestellt) auf, mit denen die Platte 1 an einem Kraftfahrzeug befestigt werden kann.

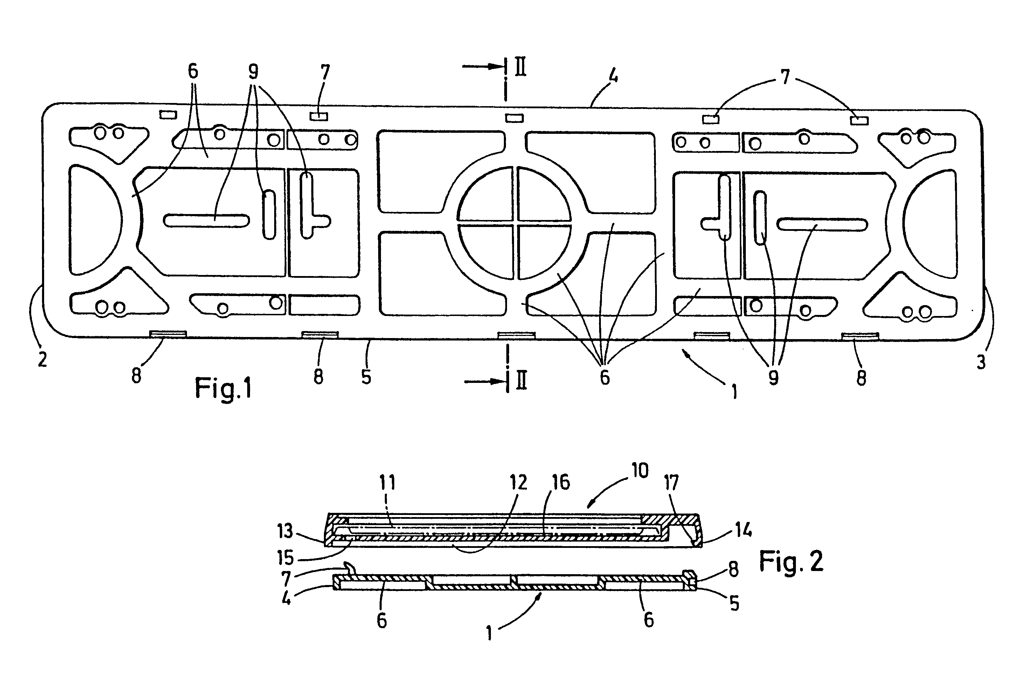

Fig. 2 zeigt in Sprengdarstellung einen gegenüber Fig. 1 vergrößerten Querschnitt durch die gesamte Befestigungsvorrichtung, bestehend aus der oben beschriebenen Platte 1 und einem als Rahmen 10 ausgebildeten Verstärkungsbauteil, das im wesentlichen der in der DE-PS 35 24 091 beschriebenen Ausführungsform entspricht, dieser gegenüber jedoch folgende zusätzliche Merkmale aufweist, die aber die konventionelle direkte Befestigung der Einheit aus Kennzeichenschild 11 (strichpunktiert in Fig. 2 angedeutet) und Rahmen 10 nicht ausschließt.

Die ringsum verlaufenden Ränder 12, 13, 14 des Rahmens 10 sind tiefer gezogen und können daher in Einbaustellung die Ränder 2-5 der Platte 1 nahezu über ihre gesamte Höhe umgreifen bzw. einschließen. In der Nähe des einen, vorzugsweise oberen Längsrandes 13 des Rahmens 10 sind mehrere Ausnehmungen 15 im Rückwandbereich und in der Ebene von den Rückwandbereich bildenden Stegen 16 vorgesehen. In diese Ausnehmungen 15 greifen im zusammengebauten Zustand die Haken 7 der Platte 1 ein. Am anderen, vorzugsweise unteren Längsrand 14 des Rahmens 10 sind in Abständen voneinander widerhakenförmige, nach innen vorstehende Rastnasen 17 vorgesehen, die in die Aussparungen 8 am unteren Längsrand 5 der Platte 1 einschnappen, wenn die Einheit Schild/Rahmen 10/11 lediglich durch Einhaken und Andrücken an der Platte 1 und damit am Fahrzeug befestigt wird.

## Ansprüche

1. Befestigungsvorrichtung aus beschränkt elastischem Kunststoff für ein Kennzeichenschild (11) von Kraftfahrzeugen, mit einem einstückig ausgebildeten, als Verstärkungsbauteil für das Kennzeichenschild dienenden, dieses am Rand umschließenden rechteckigen Rahmen, (10) dessen Rückwandbereich lediglich durch voneinander getrennte, die längeren Rahmenteile miteinander verbindende Stege (16) gebildet ist, wobei an den kürzeren Rahmenteilen Zungen vorgesehen sind, die das in den Rahmen (10) schmalseitig einschiebbare Kennzeichenschild (11) am Rand hintergreifen, dadurch gekennzeichnet, daß die ringsum verlaufenden Ränder (12-14) des Rahmens (10) über die gemeinsame rückseitige Ebene der Stege (16) hinaus verbreitert sind und die Ränder (2-5) einer am Kraftfahrzeug festschraubbaren Platte (1) umgreifen, daß die Platte (1) in der Nähe ihres einen Längsrandes (4) eine Mehrzahl von im Abstand voneinander angeordneten Haken (7) aufweist, die in entsprechende Ausnehmungen (15) am einen (13) der Längsränder (13, 14) des Rahmens (10) eingreifen, und daß die Platte (1) am anderen Längsrand (5) im Abstand voneinander angeordnete Aussparungen (8) aufweist, in die am anderen (14) der Längsränder (13, 14) des Rahmens (10) nach innen vorstehende widerhakenförmige Rastnasen (17) eingreifen.

2. Befestigungsvorrichtung nach Anspruch 1, dadurch gekennzeichnet, daß die Platte (1) auf ihrer Fläche symmetrisch angeordnete, rippenartige und auf der Rückseite hohl ausgebildete Erhöhungen (6) sowie in Vertiefungen dazwischen verschiedene Langlöcher (9) für Befestigungsschrauben aufweist.

## Claims

1. Fixing device of plastics material with limited elasticity for a number plate (11) for vehicles, with a rectangular frame (10) formed in one piece, serving as a reinforcing component for the number plate, surrounding this at the edge, the rear wall region of which frame is formed merely by webs (16) separated from one another, interconnecting the longer frame parts, wherein tongues are provided on the shorter frame parts, which tongues engage at the edge behind the number plate (11) slidable into the frame (10) on the narrow side, characterized in that the surrounding edges (12-14) of the frame (10) are widened beyond the common rear side plane of the webs (16) and engage over the edges (2-5) of a plate (1) adapted to be screwed to the vehicle, in that the plate (10) has a plurality of hooks (7) arranged in the vicinity of one longitudinal edge (4) at intervals from one another, which hooks engage in corresponding holes (15) on one (13) of the longitudinal edges (13, 14) of the frame (10), and in that the plate (10) has recesses (8) in the other longitudinal edge (5) spaced from one another, in which inwardly projecting, hook-shaped detent noses (17) on the other (14) of the longitudinal edges (13, 14) of the frame (10) engage.

2. Fixing device according to claim 1, characterized in that the plate (1) has on its surface symmetrically arranged, rib-like raised parts (6) hollow on the rear side as well as various slots (9) for fixing screws in recesses between the raised parts.

## Revendications

1. Dispositif de fixation en matière plastique d'élasticité limitée pour une plaque minéralogique (11) de véhicule automobile, qui comprend un cadre rectangulaire (10) qui est réalisé d'une seule pièce, constitue un élément de renforcement de la plaque minéralogique qu'il entoure au niveau de son bord et dont la paroi arrière est constituée simplement par des bandes (16) qui sont séparées les unes des autres et relient les unes aux autres les parties longues du cadre, les parties courtes du cadre comportant des languettes qui s'engagent au niveau du bord en arrière de la plaque minéralogique (11) qui peut être engagée dans le cadre (10) par le côté étroit, caractérisé en ce que les bords (12 à 14) qui entourent le cadre (10) s'étendent au-delà du plan arrière commun des bandes (16) et maintiennent les bords (2 à 5) d'une plaque (1) qui peut être vissée sur le véhicule automobile, en ce que la plaque 1 comporte, à proximité de l'un de ses bords longs (4), une pluralité de crochets (7) situés à une certaine distance les uns des autres qui s'engagent dans des évidements correspondants (15) ménagés dans l'un (13) des bords longs (13, 14) du cadre (10) et en ce que la plaque (1) comporte sur son autre bord long (5), des évidements (8), situés à une certaine distance les uns des autres, dans lesquels s'engagent, au niveau de l'autre (14) bord long (13, 14) du cadre (10), des becs d'arrêt (17) en forme de crochets faisant saillie à l'intérieur.

2. Dispositif de fixation selon la revendication 1, caractérisé en ce que la plaque (1) comporte sur sa surface des parties saillantes qui sont disposées symétriquement et forment des nervures creuses par derrière et des perforations oblongues (9) ménagées dans des parties rentrantes intermédiaires pour des vis de fixation.

Fig.1

Fig.2